Europäisches Patentamt

European Patent Office

Office européen des brevets

(11) Veröffentlichungsnummer: **0 245 593**
**B1**

(12) **EUROPÄISCHE PATENTSCHRIFT**

(45) Veröffentlichungstag der Patentschrift:
02.05.90

(51) Int. Cl.⁴: **F16C 25/06, F16C 33/61**

(21) Anmeldenummer: 87102679.5

(22) Anmeldetag: 25.02.87

(54) Radial-Wälzlager.

(30) Priorität: 14.05.86 DE 3616244

(43) Veröffentlichungstag der Anmeldung:
19.11.87 Patentblatt 87/47

(45) Bekanntmachung des Hinweises auf die Patenterteilung:
02.05.90 Patentblatt 90/18

(84) Benannte Vertragsstaaten:
DE ES FR GB IT

(56) Entgegenhaltungen:
CH-A- 446 824
DE-A- 2 347 052
DE-B- 1 066 389
FR-A- 2 393 185

(73) Patentinhaber: INA Wälzlager Schaeffler KG,
Industriestrasse 1-3 Postfach 1220,
D-8522 Herzogenaurach(DE)

(72) Erfinder: Kaiser, Theodor, Dipl.-Ing.,
Peter-Vischer-Strasse 10a, D-8552 Höchstadt(DE)

(74) Vertreter: Klug, Horst, Dipl.-Ing. (FH), c/o INA Wälzlager
Schaeffler KG Postfach 12 20,
D-8522 Herzogenaurach(DE)

## Beschreibung

Die Erfindung betrifft ein spieleinstellbares Radial-Wälzlager, bestehend aus zwei konzentrisch ineinander angeordneten Lagerringen, die in einander zugekehrten Mantelflächen je eine Nut aufweisen, die Laufbahnen für Wälzkörper bilden, wobei im Bereich der Wälzlager-Mittelebene, vom Nutgrund der einen Nut ausgehend, ein radial gerichteter Schlitz vorgesehen ist, der sich nur über einen Teil der Ringtiefe erstreckt, wodurch der geschlitzte Ring beiderseits des Schlitzes je eine Teil-Laufbahn besitzt, und die Schlitzweite durch auf den Ring einwirkende, eine Verformung des Ringes bewirkende Mittel veränderbar ist.

Derartige Wälzlager sind bekannt. Nachteile dieser Ausführungsformen liegen darin, daß nach der Verformung des geschlitzten Laufringes die Kontur der Laufbahnen von der Kontur der Wälzkörper abweicht, so daß Verspannungen zwischen Wälzkörpern und Laufbahnen auftreten (DE-A 2 347 052).

Der Erfindung liegt die Aufgabe zugrunde, die bei der Spieleinstellung verursachten Konturänderungen der Laufbahnen auszugleichen, und somit optimale Abrollverhältnisse für die Wälzkörper zu gewährleisten.

Erfindungsgemäß wird diese Aufgabe dadurch gelöst, daß mindestens eine Teil-Laufbahn durch einen Laufdraht gebildet ist, der auf einer dem Lagerring zugewandten Seite, mit abgerundetem Rücken ausgeführt ist, und in einer Umfangsnut des Lagerrings schwenkbar gegenüber diesem gelagert ist. Dadurch, daß der Laufdraht auch während der Verformung des Lagerringes stets mit seiner Lauffläche in Kontakt mit den Wälzkörpern bleibt, während er sich mit seinem abgerundeten Rücken gegenüber dem Lagerring verschwenkt, ist sichergestellt, daß auch nach der Verformung des Lagerringes optimale Abrollverhältnisse vorliegen.

Eine Ausführungsform der Erfindung sieht vor, daß die Verformung durch Spannschrauben bewirkt wird, die im Bereich des Schlitzes, in axialen Bohrungen angeordnet sind. Durch diese einfache und zweckmäßige Konstruktion wird der Bauraum für die Verformungsmittel möglichst gering gehalten.

Zwei Ausführungsbeispiele der Erfindung sind in den Zeichnungen im Längsschnitt dargestellt und im folgenden näher beschrieben. Es zeigen:

Fig. 1 ein Radial-Kugellager und
Fig. 2 ein Kreuzrollenlager.

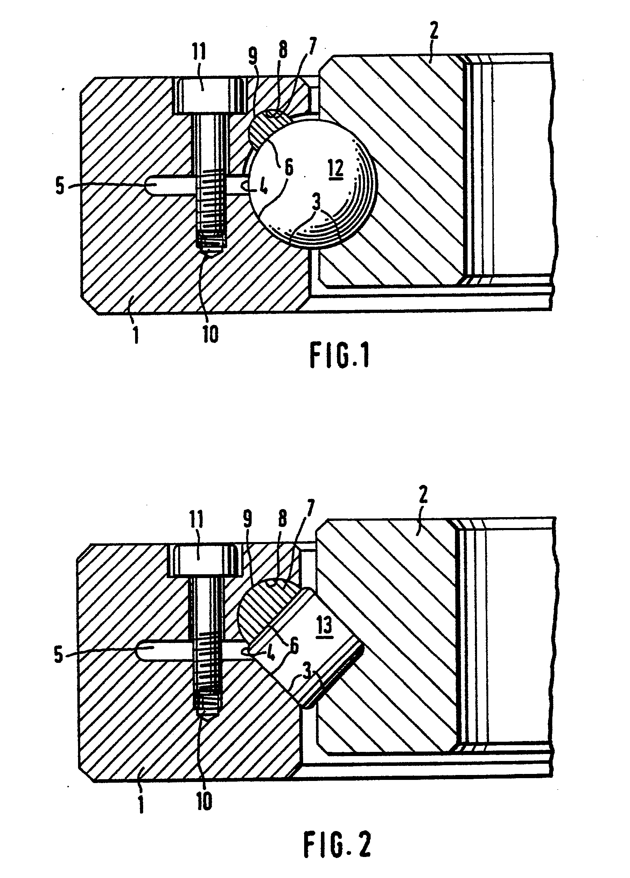

Das in Fig. 1 dargestellte Radial-Kugellager besteht aus einem äußeren Lagerring 1 und einem dazu konzentrisch angeordneten inneren Lagerring 2, die in einander zugekehrten Mantelflächen je eine Nut 3 aufweisen. Vom Nutgrund 4 der einen Nut 3 ausgehend, ist im Lagerring 1 ein radial gerichteter Schlitz 5 vorgesehen. Dadurch erhält der Lagerring 1 beiderseits des Schlitzes 5 je eine Teil-Laufbahn 6, wobei die eine Teil-Laufbahn 6 durch einen Laufdraht 7 gebildet ist, der mit abgerundetem Rücken 8 ausgeführt ist, und sich in einer Umfangsnut 9 des Lagerrings 1 befindet. Der Laufdraht 7 ist gegenüber dem Lagerring 1 schwenkbar gelagert. In axialen Bohrungen 10 sind Spannschrauben 11 angeordnet, durch die der Schlitz 5 verengt werden kann. Die dabei auftretende Verformung des Lagerrings 1 bewirkt, daß sich der Laufdraht 7 gegenüber dem Lagerring 1 verschwenkt, wodurch für die Kugeln 12, die zwischen den Lagerringen 1 und 2 abrollen, optimale Abrollverhältnisse aufrechterhalten bleiben.

Das in Fig. 2 dargestellte Kreuzrollenlager hat im Prinzip den gleichen Aufbau wie das in Fig. 1 dargestellte Radial-Kugellager, wobei hier die Wälzkörper nicht durch Kugeln 12 sondern durch Rollen 13 gebildet sind.

## Patentansprüche

1. Spieleinstellbares Radial-Wälzlager, bestehend aus zwei konzentrisch ineinander angeordneten Lagerringen (1, 2), die in einander zugekehrten Mantelflächen je eine Nut (3) aufweisen, die Laufbahnen für Wälzkörper (12, 13) bilden, wobei im Bereich der Wälzlager-Mittelebene, vom Nutgrund (4) der einen Nut (3) ausgehend, ein radial gerichteter Schlitz (5) vorgesehen ist, der sich nur über einen Teil der Ringtiefe erstreckt, wodurch der geschlitzte Ring (1) beiderseits des Schlitzes je eine Teil-Laufbahn (6) besitzt, und die Schlitzweite durch auf den Ring (1) einwirkende, eine Verformung des Ringes bewirkende Mittel (11) veränderbar ist, dadurch gekennzeichnet, daß mindestens eine Teil-Laufbahn (6) durch einen Laufdraht (7) gebildet ist, der auf einer dem Lagerring (1) zugewandten Seite, mit abgerundetem Rücken (8) ausgeführt ist, und in einer Umfangsnut (9) des Lagerrrings (1) schwenkbar gegenüber diesem gelagert ist.

2. Wälzlager nach Anspruch 1, dadurch gekennzeichnet, daß die Verformung durch Spannschrauben (11) bewirkt wird, die im Bereich des Schlitzes (5) in axialen Bohrungen (10) angeordnet sind.

## Claims

1. Radial ball bearing with adjustable play made up of two bearing rings (1, 2) arranged concentrically in each other and comprising a groove (3) each in peripheral surfaces facing each other, which grooves (3) from raceways for rolling elements (12, 13), a radially directed slot (5) starting from the bottom (4) of one of the grooves (3) being provided in the region of the mid-plane of the rolling bearing and extending over only a part of the ring depth, whereby the slotted ring (1) has a part raceway (6) on each side of the slot and the slot width can be varied by means (11) acting on the ring (1) and effecting its deformation, characterized in that at least one part raceway (6) is formed by a race wire (7) which has a rounded back (8) on its side facing the bearing ring (1) and is mounted in a peripheral groove (9) of the bearing ring (1) for swivelling movement with respect to the latter.

2. Rolling bearing according to Claim 1, characterized in that the deformation is effected by means of tightening screws (11) arranged in the region of the slot (5) in axial bores (10).

## Revendications

1. Palier radial à roulement à jeu ajustable comportant deux bagues de roulement (1, 2) agencées concentriquement l'une dans l'autre et comprenant chacune une rainure (3) dans leurs surfaces périphériques en vis-à-vis, les deux rainures (3) formant des chemins de roulement pour des corps de roulement (12, 13), une fente (5) orientée radialement et commençant au fond (4) d'une des rainures (3) étant prévue dans la région du plan médian du palier à roulement et ne s'étendant que sur une partie de la profondeur de la bague, grâce à quoi la bague à fente (1) a un chemin partiel de roulement (6) de chaque côté de la fente et la largeur de la fente peut être modifiée par des moyens (11) agissant sur la bague (1) et déformant celle-ci, caractérisé en ce qu'au moins un chemin partiel de roulement (6) est formé par un fil de roulement (7) dont le côté faisant face à la bague de roulement (1) est réalisé avec un dos arrondi (8), le fil étant monté dans une rainure périphérique (9) de la bague de roulement (1) de manière à pouvoir pivoter par rapport à cette dernière.

2. Palier à roulement selon la revendication 1, caractérisé en ce que la déformation est réalisée par des vis de tension (11) agencées dans la région de la fente (5) dans des alésages ariaux (10).

FIG.1

FIG. 2